Europäisches Patentamt

European Patent Office

Office européen des brevets

(11) Numéro de publication: **0 356 267**
A1

# DEMANDE DE BREVET EUROPEEN

(21) Numéro de dépôt: **89401653.4**

(22) Date de dépôt: **14.06.89**

(51) Int. Cl.⁵: **C 04 B 35/58**
C 01 B 21/064

(30) Priorité: **27.06.88 FR 8808579**

(43) Date de publication de la demande:
**28.02.90 Bulletin 90/09**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Seon, Françoise**
**50, avenue de la Dame Blanche**
**F-94120 Fontenay/Sous/Bois (FR)**

(74) Mandataire: **Dubruc, Philippe et al**
**RHONE-POULENC CHIMIE Service Brevets Chimie 25,**
**quai Paul-Doumer**
**F-92408 Courbevoie Cédex (FR)**

(54) **Nouveau matériau à base de nitrure de bore, son procédé de préparation et son utilisation comme agent de renforcement.**

(57) Matériau à base de nitrure de bore caractérisé par le fait qu'il présente une morphologie essentiellement fibrillaire. Le procédé de préparation d'un tel matériau est caractérisé par le fait que l'on fait réagir dans un bain de sels fondus au moins un nitrure d'alcalins ou d'alcalino-terreux avec au moins un composé de bore susceptible d'être transformé en nitrure de bore par ledit nitrure d'alcalins ou d'alcalino-terreux dans ledit bain de sels fondus.

Le produit selon l'invention trouve une application comme agent de renforcement de matériaux composites.

EP 0 356 267 A1

**Description**

## NOUVEAU MATERIAU A BASE DE NITRURE DE BORE, SON PROCEDE DE PREPARATION ET SON UTILISATION COMME AGENT DE RENFORCEMENT

L'invention a trait à un nouveau matériau à base de nitrure de bore.

Elle concerne également un procédé de préparation d'un tel matériau.

Elle concerne enfin, à titre d'application, l'utilisation dudit matériau dans la fabrication de matériaux composites contenant, entre autres, du nitrure de bore.

On sait que le nitrure de bore est un matériau de plus en plus recherché, en raison notamment de sa stabilité aux hautes températures, de sa résistance aux chocs thermiques, de sa grande inertie chimique et de sa très bonne conductivité thermique. D'autre part, sa faible conductivité électrique en fait un isolant de choix.

On connait à l'heure actuelle divers procédés pour préparer du nitrure de bore.

L'un d'entre eux consiste à faire réagir en phase gazeuse du trichlorure de bore avec de l'ammoniac. On obtient ainsi une poudre fine de nitrure de bore, qu'il est possible de fritter pour obtenir des pièces massives.

Plus récemment, on a découvert qu'il était possible de préparer du nitrure de bore par pyrolyse de polymères précurseurs.

L'intérêt de la voie polymère réside surtout dans les possibilités de mise en forme de ce type de produit, et plus particulièrement pour l'obtention, après pyrolyse, de fibres en nitrure de bore.

Il est enfin connu de préparer du nitrure de bore par réaction, en milieu sels fondus, entre un composé du bore (par exemple l'oxyde de bore) et de l'ammoniac gazeux.

Le problème est que les poudres de nitrure de bore obtenues par l'une quelconque des voies ci-dessus ne présentent pas toujours des caractéristiques adéquates à certaines applications bien particulières.

Ainsi, plus précisément, dans le cas de la fabrication de composites à matrice plastique, verre, métal ou céramique contenant du nitrure de bore comme agent de renforcement, et compte tenu du fait que, d'une manière générale, il est bien connu que dans de tels composites les caractéristiques de l'interface entre l'agent de renforcement et la matrice ont une grande importance, il serait hautement souhaitable de pouvoir disposer d'un matériau à base de nitrure de bore présentant des caractéristiques morphologiques telles qu'elles lui assurent une comptabilité maximale avec ladite matrice, et ceci de manière à pouvoir obtenir finalement des composites à propriétés améliorées.

L'un des buts poursuivis par la présente invention est donc de fournir un matériau céramique à base de nitrure de bore présentant de telles caractéristiques.

L'invention a également pour but de proposer des moyens simples, efficaces, économiques et de mise en oeuvre aisée, permettant d'obtenir de manière fiable et reproductible ledit matériau à base de nitrure de bore.

A ces effets, l'invention propose tout d'abord un nouveau matériau à base de nitrure de bore et qui est caractérisé par le fait qu'il présente une morphologie essentiellement fibrillaire.

En outre, le matériau selon l'invention répond à au moins l'une des caractéristiques suivantes :

- le nitrure de bore se présente essentiellement sous une forme cristalline de type hexagonale
- lesdites fibrilles présentent une longueur comprise entre environ 500 Å et 10000 Å
- elles présentent une épaisseur comprise entre environ 50 Å et 1000 Å
- lesdites fibrilles sont enchevétrées sous la forme d'agglomérats
- lesdits agglomérats ont une taille comprise entre 0,6 µ et 7 µ
- la surface spécifique B.E.T. dudit matériau est comprise entre 30 m²/g et 100 m²/g
- le taux d'impuretés contenues dans ledit matériau à base de nitrure de bore n'excède pas 5 % en poids, et de préférence n'excède pas 3 % en poids.

De par sa structure et sa morphologie même, le produit selon l'invention possède une très bonne compatibilité avec des matrices de type plastique, verre, métal ou de préférence céramique (carbure, nitrure, carbonitrure, oxynitrure et autres), et ceci grâce aux propriétés d'interface BN / matrice améliorées. Le comportement, dans un composite, du produit à base de nitrure de bore selon l'invention peut être rapproché, d'un point de vue mécanique, à celui de certains autres agents de renforcement céramiques, comme des whiskers en carbure de silicium ou en nitrure de silicium.

Un procédé particulier de préparation du produit selon l'invention va maintenant être décrit.

Selon l'invention, on fait réagir dans un bain de sels fondus constitué d'au moins un halogénure d'alcalin ou d'alcalino-terreux (a) au moins un nitrure d'alcalin ou d'alcalino-terreux avec (b) au moins un composé du bore susceptible d'être transformé en nitrure de bore par ledit nitrure d'alcalin ou d'alcalino-terreux dans ledit bain de sels fondus.

Les composés du bore convenant pour la présente invention peuvent être notamment choisis, seuls ou en mélanges, parmi les oxydes de bore, les hydroxydes de bore, les acides boriques, les borates d'alcalins ou d'alcalino-terreux comme par exemple le borate de sodium ou de calcium, les halogénures (de préférence les chlorures) et les oxyhalogénures (de préférence les oxychlorures) de bore.

Les composés du bore préférés pour la mise en oeuvre du procédé selon l'invention sont les oxydes de bore, les borates d'alcalins ou d'alcalino-terreux, et les acides boriques ; encore plus préférentiellement, on utilise les oxydes de bore, et plus particulièrement l'oxyde $B_2O_3$.

Les nitrures d'alcalins ou d'alcalino-terreux utilisables dans la présente invention peuvent être choisis, seuls ou en mélange, parmi les nitrures de lithium, de sodium, de potassium, de rubidium, de césium, de magnésium, de calcium, de strontium et de baryum.

Selon un mode préféré de mise en oeuvre du procédé selon l'invention, on utilise un nitrure d'alcalin, et plus particulièrement du nitrure de lithium.

Les bains de sels fondus qui doivent être utilisés dans le présent procédé sont constitués par des halogénures, et de préférence des chlorures ou des fluorures, d'alcalins ou d'alcalino-terreux, ainsi que leurs mélanges.

De préférence, on utilise des mélanges, binaires ou ternaires, à base de chlorures ou de fluorures d'alcalins, comme par exemple le fluorure ou le chlorure de lithium, le fluorure ou le chlorure de calcium, et le fluorure ou le chlorure de potassium.

Selon un mode encore plus préféré de mise en oeuvre du procédé selon l'invention, lesdits bains de sel contiennent toujours au moins un chlorure ou un fluorure de lithium ; ainsi, à titre de mélange binaire convenant particulièrement bien, on peut citer LiCl-KCl, et à titre de mélange ternaire, LiCl - KCl-LiF.

Le choix de la nature du bain de sels fondus qui forme le milieu solvant pour les réactions de formation du nitrure de bore selon l'invention est, en outre, d'une manière générale gouverné par les deux exigences pratiques suivantes: les produits réactifs doivent tout d'abord pouvoir se dissoudre, au moins en partie, ou pouvoir être mis aisément en dispersion dans ce bain ; et d'autre part, le produit de réaction désiré doit y être peu soluble.

On aura bien entendu également intérêt à travailler avec des compositions de bain qui présentent des points de fusion les plus bas possible, ceci d'une part pour empêcher une trop grande consommation d'énergie et d'autre part pour éviter tout problème technologique, de corrosion notamment ; à cet effet, il peut être avantageux de travailler avec des compositions eutectiques.

La température à laquelle est conduite la réaction de formation du nitrure de bore est comprise entre 400° C et 1000° C, de préférence comprise entre 450° C et 500°C.

Une température comprise dans ces fourchettes, et notamment la fourchette préférentielle, est alors suffisamment basse pour limiter les consommations d'énergie et les problèmes technologiques susmentionnés, mais aussi suffisamment élevée pour que les cinétiques des réactions mises en jeu dans le présent procédé soient rapides et donc compatibles avec une bonne marche industrielle.

De préférence, cette réaction est conduite sous agitation, mécanique ou autre, du milieu réactionnel. Elle est également de préférence conduite sous atmosphère inerte, telle que d'argon.

Les quantités de réactifs nécessaires à mettre en oeuvre dans le présent procédé doivent correspondre, au minimum, aux quantités stoëchiométriques de la réaction qui est mise en jeu dans le milieu réactionnel considéré, laquelle se déduit tout naturellement de la nature des réactifs de départ utilisés.

Le nitrure de bore formé et précipité en cours de réaction (avec un très bon rendement, puisque supérieur à 80 % en poids) étant solide dans les zones de température précitées, il peut être séparé facilement du milieu réactionnel qui s'enrichit progressivement en divers produits de réaction, ces produits restant pour leur part à l'état fondu.

Ainsi, après réaction, le nitrure peut être séparé du bain par tout moyen connu en soi, notamment par filtration, ce par quoi l'on obtient d'une part le nitrure de bore désiré extrait sous forme de poudre et d'autre part un mélange de sels fondus dont on peut réajuster la composition en cours de réaction par rajout de réactifs de manière à ce que le procédé fonctionne de manière continue.

Bien entendu, on peut également procéder de manière discontinue, c'est à dire attendre qu'au moins un des réactifs introduit en une seule fois ait réagi puis, à l'issue de la réaction, refroidir la masse réactionnelle et enfin séparer le nitrure de bore de sa matrice de sels, notamment par désintégration de celle-ci par un lavage avec une eau pure ou légèrement acidifiée.

Le nitrure de bore recueilli par l'une ou l'autre voie (continue ou discontinue) se présente sous la forme d'une poudre très homogène chimiquement et morphologiquement, et qu'il est possible de purifier encore par simple lavage à l'eau pure ou acidifiée, suivi d'un séchage.

Il peut être éventuellement souhaitable de procéder à une étape finale de broyage pour amener la poudre à une granulométrie rigoureuse.

Le procédé selon l'invention présente l'avantage de conduire à un matériau selon l'invention très pur, et ceci avec un très bon rendement, tout en maintenant des températures de réactions modérées.

Des exemples concrets, mais non limitatifs, illustrant l'invention dans ses divers aspects, vont maintenant être donnés.

## EXEMPLE 1

On prépare 308 g d'un bain fondu de composition pondérale :

LiCl : 42,5 %

KCl : 52,4 %

LiF : 5,1 %

par fusion sous vide partiel (1 cm Hg) des halogénures le constituant. On le maintient ensuite sous atmosphère contrôlée d'argon, à une température de 470°C. Ce bain étant alors agité à raison de 600 t/mn, on y introduit 40 g de Li$_3$N et 40 g de B$_2$O$_3$ de telle façon que la réaction :

$$2 \, Li_3N + B_2O_3 \rightarrow 2BN + 3Li_2O$$

puisse se faire (réactifs en quantités stoechiométriques).

En fin de réaction (durée supérieure ou égale à 15 mn) et après décantation puis lavage à l'eau distillée, on récupère environ 25 g d'un produit identifié par IR et RX comme étant du nitrure de bore cristallisé sous forme hexagonale. Son analyse chimique est là suivante :

| | | | |
|---|---|---|---|
| B : | 42,2 % | Li : | 0,2 % |
| N : | 50,7 % | K : | 0,2 % |
| Oxygène : | 4,2 % | Al,Ca,Cr : | 100 - 250 ppm |
| Si, Fe, Mg : | 50 à 100 ppm | Cu : | 10 - 50 ppm |

Elle montre que seule une très faible partie de l'oxyde de bore n'a pas réagi. Le rendement de l'opération atteint 87 % poids.

Le nitrure de bore ainsi obtenu se présente sous forme de fibrilles de longueurs comprises entre 1800 et 3500 Å, et d'épaisseurs de l'ordre de 90 à 300 Å . Ces fibrilles forment des agglomérats de quelques microns.

EXEMPLE 2

On prépare 300 g d'un bain fondu de composition pondérale :
LiCl : 44.8%
KCl : 55,2%
d'une manière analogue à celle décrite dans l'exemple 1. On introduit alors dans ce bain, maintenu (sous argon) à 470°C, et agité à 600 t/mn, 20 g de $Li_3N$ et 20 g de $B_2O_3$ de telle façon que la réaction :
$$2 Li_3N + B_2O_3 \rightarrow 2 BN + 3Li_2O$$
puisse se faire (réactifs en quantités stoechiométriques).

Après 15 minutes de réaction on effectue une décantation et un lavage à l'eau distillée du solide obtenu. On récupère ainsi 11,5 g de nitrure de bore cristallisé sous forme hexagonale contenant une très faible quantité d'oxyde de bore n'ayant pas réagi comme le montre l'analyse chimique suivante du produit obtenu :

| | | | |
|---|---|---|---|
| B : | 42,6 % | Li : | 0,07 % |
| N : | 54,3 % | K : | 0,1 % |
| Oxygène : | 2,7 % | | |

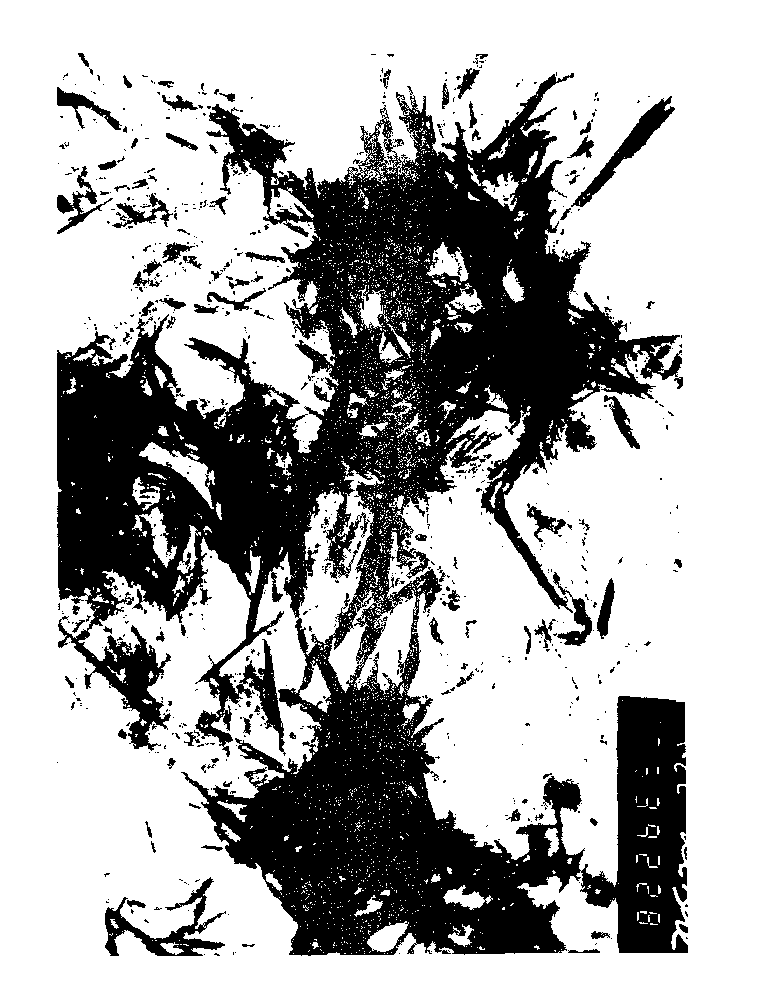

Le rendement de la préparation du nitrure de bore est de 81 % poids. Le nitrure de bore ainsi obtenu se présente sous forme de fibrilles dont les longueurs varient de 900 à 4000 Å et les épaisseurs de 100 à 500 Å. Ces fibrilles sont enchevêtrées (aspect floconneux) sous la forme d'agglomérats de quelques microns. Le produit obtenu est représenté par la photo 1 en annexe jointe.

**Revendications**

1/ Matériau à base de nitrure de bore caractérisé par le fait qu'il présente une morphologie essentiellement fibrillaire.

2/ Matériau selon la revendication 1 caractérisé en ce que le nitrure de bore se présente essentiellement sous une forme cristalline de type hexagonale.

3/ Matériau selon l'une quelconque des revendications précédentes caractérisé en ce que lesdites fibrilles présentent une longueur comprise entre environ 500 Å et 10000 Å.

4/ Matériau selon l'une quelconque des revendications précédentes caractérisé en ce que lesdites fibrilles présentent une épaisseur comprise entre environ 50 Å et 1000 Å.

5/ Matériau selon l'une quelconque des revendications précédentes caractérisé en ce que lesdites fibrilles sont enchevêtrées sous la forme d'agglomérats dont la taille est comprise entre environ 0,6 micron et 7 microns.

6/ Matériau selon l'une quelconque des revendications précédentes caractérisé en ce que sa surface spécifique B.E.T. est comprise entre 30 m²/g et 100 m²/g.

7/ Matériau selon l'une quelconque des revendications précédentes caractérisé en ce que sa teneur en impuretés n'excède pas 5 % en poids.

8/ Matériau selon la revendication 7 caractérisé en ce que ladite teneur n'excède pas 3 % en poids.

9/ Procédé de préparation d'un matériau à base de nitrure de bore tel que défini notamment à l'une quelconque des revendications 1 à 8, caractérisé en ce que l'on fait réagir dans un bain de sels fondus constitué d'au moins un halogénure d'alcalin ou d'alcalino-terreux:
  a) au moins un nitrure d'alcalin ou d'alcalino-terreux, avec
  b) au moins un composé du bore susceptible d'être transformé en nitrure de bore par ledit nitrure d'alcalin ou d'alcalino-terreux dans ledit bain de sels fondus.

10/Procédé selon la revendication 9 caractérisé en ce que ledit composé du bore est choisi parmi les oxydes de bore, les hydroxydes de bore, les acides boriques, les borates d'alcalins ou d'alcalino-terreux, les halogénures de bore et les oxyhalogénures de bore.

11/Procédé selon la revendication 10 caractérisé en ce que l'on utilise des oxydes de bore et/ou des borates d'alcalins ou d'alcalino-terreux et/ou des acides boriques.

12/Procédé selon la revendication 11 caractérisé en ce que l'on utilise des oxydes de bore.

13/Procédé selon l'une quelconque des revendications 9 à 12 caractérisé en ce que l'on utilise des nitrures d'alcalins.

14/Procédé selon la revendication 13 caractérisé en ce que l'on utilise du nitrure de lithium.

15/Procédé selon l'une quelconque des revendications 9 à 14 caractérisé en ce que les halogénures constituant ledit bain de sels fondus sont choisis parmi les chlorures et les fluorures.

16/Procédé selon la revendication 15 caractérisé en ce que l'on utilise des chlorures et/ou des fluorures d'alcalins.

17/Procédé selon la revendication 16 caractérisé en ce que l'on utilise un bain de sels fondus contenant un fluorure et/ou un chlorure de lithium.

18/Procédé selon l'une quelconque des revendications 9 à 17 caractérisé en ce que la température du bain de sels fondus est comprise entre 400 et 1000°C.

19/Procédé selon la revendication 18 caractérisé en ce que cette température est comprise entre 450 et 500°C.

20/Procédé selon l'une quelconque des revendications 9 à 19 caractérisé en ce que la réaction est conduite sous atmosphère inerte, telle que d'argon.

21/Utilisation d'un matériau à base de nitrure de bore tel que défini à l'une quelconque des revendications 1 à 9 ou susceptible d'être obtenu par la mise en oeuvre d'un procédé tel que défini à l'une quelconque des revendications 9 à 20, pour la fabrication de matériaux composites à matrice plastique, verre, métal, céramique et autres.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 137 652 (YUKAMELAMIN CO. LTD.) * revendications 1,8,9 * --- | 1-4 | C 04 B 35/58 C 01 B 21/064 |
| X | US-A-3 429 722 (J. ECONOMY et al.) * colonne 22, lignes 32-46; revendications 1-4 * --- | 1-4,21 | |
| A | DE-C-1 096 884 (UNION CARBIDE CORP.) * revendications 1-3 * --- | 9-18 | |
| A | US-A-3 241 918 (W. S. LENIHAN, JR. et al.) * revendications 1,3-5 * ----- | | |

DOMAINES TECHNIQUES RECHERCHES (Int. Cl.5)

C 04 B
C 01 B

Le présent rapport a été établi pour toutes les revendications

| Lieu de la recherche | Date d'achèvement de la recherche | Examinateur |
|---|---|---|
| BERLIN | 10-10-1989 | KESTEN W.G. |